# FASCICULE DE BREVET EUROPEEN

(11) **EP 2 781 957 B1**
(45) Date de publication et mention de la délivrance du brevet: **09.03.2016**
(21) Numéro de dépôt: 13305347.0
(22) Date de dépôt: 21.03.2013
(51) Int. Cl.: G02F 1/313, G02B 6/00, G02F 1/015

(54) **Dispositif de filtrage optique à anneau résonateur**
Optische Filtervorrichtung mit Resonanzring
Optical filtering device with resonator ring

(43) Date de publication de la demande: 24.09.2014
(73) Titulaire: ALCATEL LUCENT, 92100 Boulogne-Billancourt (FR); COMMISSARIAT A L'ENERGIE ATOMIQUE ET AUX ENERGIES ALTERNATIVES, 75015 Paris (FR)
(72) Inventeur: Chimot, Nicolas, 91460 MARCOUSSIS (FR); Lelarge, François, 91460 MARCOUSSIS (FR)
(74) Mandataire: Loyer & Abello

(56) Documents cités:
- EP-A1- 1 786 121
- EP-A2- 1 158 326
- J. LEUTHOLD; C.H. JOYNER: "Multimode Enterference couplers with tunable power splitting ratios", JOURNAL OF LIGHTWAVE TECHNOLOGY, vol. 19, no. 5, mai 2001 (2001-05), XP002711648,
- MAY-ARRIOJA D A ET AL: "Reconfigurable 3-dB MMI splitter", IEEE/LEOS SUMMER TOPICAL MEETINGS, 2008 DIGEST OF THE, IEEE, PISCATAWAY, NJ, USA, 21 juillet 2008 (2008-07-21), pages 39-40, XP031298814, ISBN: 978-1-4244-1925-8
- ANTONIO-LOPEZ J E ET AL: "Tunable multimode-interference bandpass fiber filter", OPTICS LETTERS, THE OPTICAL SOCIETY, vol. 35, no. 3, 1 février 2010 (2010-02-01), pages 324-326, XP001551623, ISSN: 0146-9592, DOI: 10.1364/OL.35.000324

## Description

### Domaine technique.

L'invention se rapporte au domaine des communications par moyens optiques et plus spécialement à des dispositifs de filtrage de signaux optiques pouvant être utilisés pour recevoir et émettre des signaux optiques.

### Arrière-plan technologique.

La transmission par fibre optique passe par l'utilisation de la technique de multiplexage de longueurs d'onde optiques (appelée WDM en anglais pour « Wavelength Division Multiplexing »). Comme toute technique de multiplexage, cette technique consiste à combiner sur un même média plusieurs signaux modulés. Dans le cas des communications optiques, le média qui n'est autre qu'une fibre optique transportant des signaux sur des canaux différents. Ces canaux sont définis par la longueur d'onde porteuse des signaux transmis. Le multiplexage par longueur d'onde, que l'on appellera WDM, exige une qualité importante dans l'émission des signaux. Cela est d'autant plus important que les longueurs d'onde sont rapprochées. En effet, l'émission d'un signal sur une longueur d'onde décalé peut produire différents effets de bord. Par exemple, cela peut produire des interférences avec un signal de longueur d'onde voisine. Cela pose également des problèmes lors de la réception, notamment lors de l'étape du démultiplexage. De même, la qualité des composants utilisés impacte directement la qualité des traitements et, par conséquent, les distances ou bandes passantes utilisables. En effet, le débit d'une ligne reliée à un démultiplexeur dépend notamment de la qualité des composants en charge du filtrage permettant de réaliser l'extraction d'un signal pour une longueur d'onde définie. Aujourd'hui, les tolérances réalisables en fabrication sont un facteur limitatif du débit.

### Résumé.

Une idée à la base de l'invention est de proposer un dispositif de filtrage optique à fonction de transfert ajustable, utilisable dans tous types d'équipements.

Selon un mode de réalisation, l'invention fournit un dispositif de filtrage optique comportant :
un anneau résonateur,
un coupleur par interférence multimode comprenant deux entrées, deux sorties et un guide d'onde multimode reliant les deux entrées aux deux sorties, le coupleur présentant une première entrée servant d'entrée du dispositif de filtrage et apte à recevoir un signal optique d'entrée, une première sortie correspondant à la sortie du dispositif de filtrage et apte à produire un signal optique de sortie, le guide d'onde comportant une zone de couplage disposée entre les entrées et les sorties et apte à former quatre images du signal d'entrée,
l'anneau résonateur étant disposé de manière à relier une seconde sortie du coupleur, à une seconde entrée du coupleur,
dans lequel le dispositif de filtrage comporte
un élément de réglage apte à modifier localement l'indice de réfraction dans la zone de couplage dudit guide d'onde multimode pour faire varier un coefficient de couplage entre le coupleur et l'anneau résonateur.

Grâce à ces caractéristiques, il est possible de régler le rapport de répartition du signal optique entre les deux sorties du coupleur. Ce réglage permet de modifier le coefficient de couplage avec l'anneau résonateur. Par conséquent, cela modifie le rapport entre le niveau haut et le niveau bas d'un signal optique, afin d'améliorer la qualité d'un signal optique numérique. Ainsi, il est possible par conception de définir la fonction de transfert du filtre et de l'ajuster pendant le fonctionnement.

Selon des modes de réalisation, un tel dispositif de filtrage optique peut comporter une ou plusieurs des caractéristiques suivantes.

Selon un mode de réalisation, l'élément de réglage est apte à modifier l'indice de réfraction dans une partie centrale de la zone de couplage, couvrant deux images centrales dans le guide d'onde. Selon un mode de réalisation, l'élément de réglage est apte à modifier l'indice de réfraction dans une partie périphérique de la zone de couplage couvrant deux images périphériques dans le guide d'onde, la partie périphérique étant centrée dans la direction longitudinale du guide d'onde.

Grâce à ces caractéristiques, l'indice de réfraction du guide d'onde à mi-distance longitudinale peut différer entre le centre et l'extérieure selon la direction transversale. Ainsi, deux zones d'indices différents sont créées, modifiant la répartition du signal optique entre les deux sorties du coupleur.

Selon un mode de réalisation, l'élément de réglage est apte à modifier la température de la zone de couplage pour modifier l'indice de réfraction.

Selon un mode de réalisation, l'élément de réglage comporte une résistante chauffante disposée sur la zone de couplage. Selon un mode de réalisation, l'élément de réglage comporte un film chauffant déposé sur la zone de couplage.

Grâce à ces caractéristiques, l'indice de réfraction du guide d'onde est modifié par effet thermo-optique. Le gradient de température appliqué localement au guide d'onde provoque une déformation locale par dilatation du réseau cristallin. C'est cette déformation qui est à la source de la variation de l'indice de réfraction.

Selon un mode de réalisation, l'élément de réglage est apte à injecter des charges électriques dans la zone de couplage diminuant l'indice de réfraction. Selon un mode de réalisation, l'élément de réglage comporte une électrode métallique disposée sur une partie centrée dans la direction longitudinale du guide d'onde.

Grâce à ces caractéristiques, l'indice de réfraction est modifié par effet électro-optique. L'augmentation localement de la densité d'électrons se traduit par une diminution de l'indice de réfraction. C'est l'effet plasma.

Selon un mode de réalisation, le coupleur a une longueur optique correspondant à un coefficient de couplage par défaut égal à 50%, tel que le signal optique d'entrée est transmis pour moitié sur la première sortie et pour moitié sur la seconde sortie.

Selon un mode de réalisation, le filtre a des conditions de couplage correspondant aux conditions de couplage critique, de sorte que le rapport entre les niveaux bas et haut d'un signal optique sur la première sortie peut varier sur une plage d'au moins 30dB en variant le coefficient de couplage de seulement 10%.

Selon un mode de réalisation, l'anneau résonateur est apte à filtrer le signal d'entrée pour rejeter en sortie une composante du signal d'entrée correspondant à une longueur d'onde λ et des harmoniques de λ.

Selon un mode de réalisation, le dispositif comprend en outre un module d'ajustement des longueurs d'onde filtrées par l'anneau résonateur, le module d'ajustement étant apte à modifier une propriété physique de l'anneau résonateur pour régler les longueurs d'onde filtrées par l'anneau résonateur.

Selon un mode de réalisation, le module d'ajustement est apte à modifier la température de l'anneau résonateur.

Selon un mode de réalisation, l'anneau résonateur, le coupleur, et l'élément de réglage, sont intégrés de manière monolithique dans un composant optique intégré.

Grâce à ces caractéristiques, Il est possible d'ajuster la fréquence de filtrage de l'anneau résonateur. Par exemple, cela permet d'accorder, par un réglage fin, le filtre avec une source, comme une source laser.

Selon un mode de réalisation, le composant comporte un substrat en silicium. Selon un mode de réalisation, le composant comporte un substrat en phosphure d'indium.

Certains aspects de l'invention partent de l'idée d'associer un anneau résonateur et un coupleur par interférence multimode de manière à permettre le réglage du facteur de couplage encore appelé coefficient de couplage de l'anneau résonateur pour obtenir un dispositif de filtrage optique passif.

Certains aspects de l'invention partent de l'idée de réaliser un filtre à bas coût. Certains aspects de l'invention partent de l'idée de fournir un filtre de faible encombrement. Certains aspects de l'invention partent de l'idée de proposer une solution entièrement intégrée.

Certains aspects de l'invention partent de l'idée d'utiliser un semi-conducteur passif, c'est-à-dire un semi-conducteur dont l'absorption à la longueur d'onde du signal optique est limitée afin de réduire les pertes de puissance dans le dispositif.

### Brève description des figures.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- La figure 1 est une représentation schématique fonctionnelle d'un filtre optique.
- La figure 2 est une représentation schématique fonctionnelle du coupleur par interférence multimode du filtre de la figure 1.
- La figure 3 est une représentation graphique de l'évolution du rapport de répartition de la puissance des signaux lumineux en fonction de l'indice de réfraction, du coupleur par interférence multimode de la figure 2.
- La figure 4 est une représentation graphique de la fonction de transfert d'un anneau résonateur du filtre de la figure 1 en fonction de la longueur d'onde, pour différentes valeurs de son coefficient de couplage.

### Description détaillée de modes de réalisation.

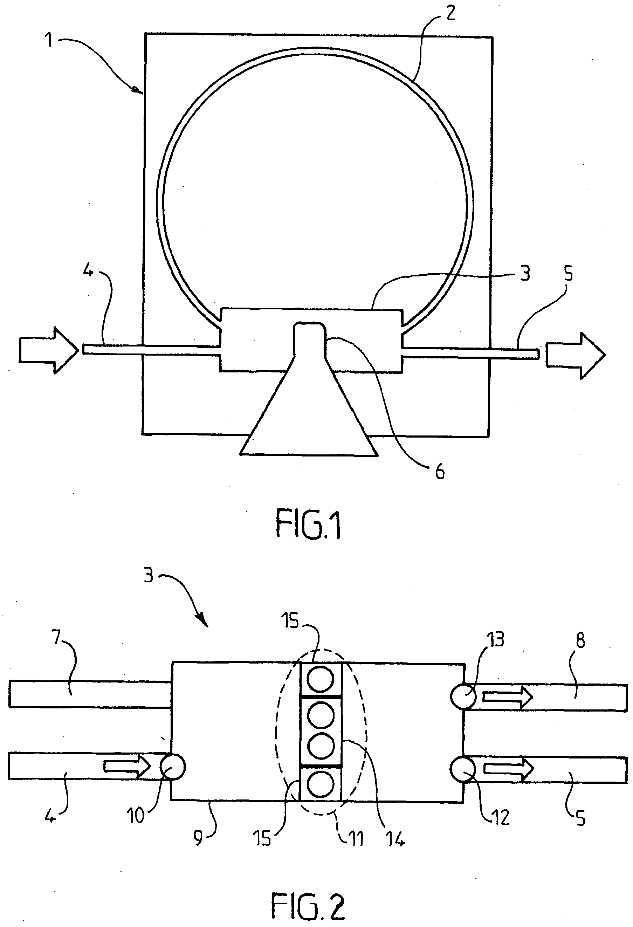

En se reportant à la **figure 1****,** on a représenté un dispositif de filtrage optique 1 comprenant un anneau résonateur 2 associé à un coupleur par interférence multimode 3 encore appelé ci-après coupleur MMI (de l'anglais « multimode interference coupler »). Ce dispositif de filtrage 1 comprend une entrée 4 et une sortie 5. Le dispositif de filtrage 1 est ajustable à l'aide d'une électrode 6 disposée dans une zone sur le coupleur MMI 3. L'électrode 6 est par exemple métallique.

L'entrée 4 permet de brancher sur le dispositif de filtrage 1 toute source de communication optique, comme une fibre optique ou un laser. La sortie 5 fournit un signal de sortie correspondant au signal d'entrée selon la fonction de transfert du dispositif de filtrage 1.

Pour effectuer un réglage, l'électrode 6 permet d'effectuer une injection de courant au niveau de la zone du coupleur MMI 3 correspondant à un effet plasma. En variante, elle permet de modifier la température du coupleur 3 dans la zone pour bénéficier d'un effet thermo-optique au niveau du coupleur MMI 3.

En référence à la **figure 2****,** on va décrire le coupleur MMI 3 de la figure 1. Ce coupleur MMI 3 est du type 2x2, c'est-à-dire qu'il comprend deux entrées 4 et 7, deux sorties 5 et 8 entre lesquelles est disposé un guide d'onde multimode 9. Le guide d'onde 9 est le plus court et le plus large possible, pour augmenter la bande passante et assouplir les tolérances de fabrication, tout en respectant l'accord de transmission de 2 vers 2.

En fonctionnement, le coupleur MMI 3 reçoit une image entrante 10 sur l'une 4 de ces entrées. Par les phénomènes d'interférence dans le guide d'onde 9, cette image entrante 10 est reproduite en une simple ou une multitude d'images à des intervalles périodiques dans le guide d'onde 9. La duplication de l'image entrante 10 est produite selon la direction de propagation de la lumière depuis l'entrée 4 vers les sorties 5 et 8. Dans ce coupleur MMI 2x2 3, l'image entrante 10 est reproduite pour donner quatre images dans une zone 11, à mi-chemin dans le guide d'onde 9. Le rapport de séparation de l'image entrante 10, entre les images sortantes 12 et 13 est de préférence de 50% fixé par la conception du coupleur MMI 3. Cela signifie que les puissances lumineuses des images sortantes 12 et 13 sont égales. En variante, le ratio de séparation fixé par la conception n'est pas de 50% sur chaque sortie 5, 8, pour produire des images sortantes 12 et 13 de puissances lumineuses différentes.

La stabilité du ratio de séparation est dépendante de l'indice de réfraction dans la zone 11. En effet, par défaut l'indice de réfraction est constant dans toute la zone 11. Si l'indice de réfraction d'une zone centrée 14 comprenant les 2 images centrales, diffère de l'indice de réfraction d'une zone périphérique 15, cela provoque une modification de la relation de phase entre les images de la zone centrée 14 par rapport à la zone périphérique 15 dans la zone 11. Cette modification se répercute sur les images sortantes 12 et 13. Cela impacte donc le ratio de séparation qui évolue en faveur de l'une ou l'autre des images sortantes 12, 13.

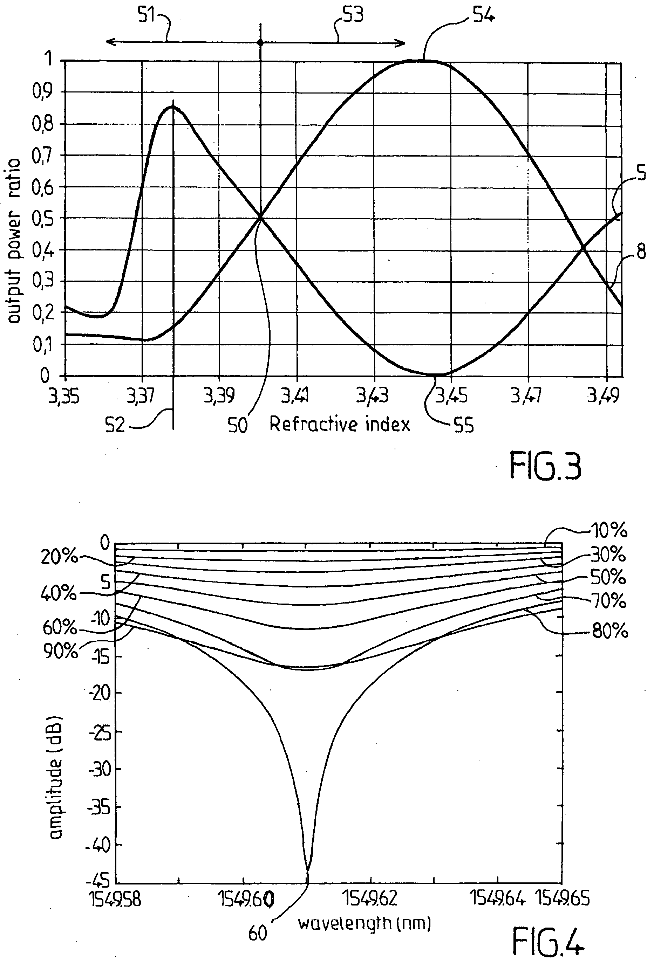

En se reportant à la **figure 3****,** on voit l'évolution du rapport de répartition de la puissance des signaux lumineux entre les sorties 5 et 8, d'un signal d'entrée en fonction de l'évolution de l'indice de réfraction de la zone centrée 14. Cette courbe correspond à la fonction de transfert d'un semi-conducteur passif dont l'absorption n'est pas trop élevée à la longueur d'onde du signal entrant. Ici il s'agit d'un matériau quaternaire présentant une bande interdite à la longueur d'onde de 1,3µm, qui est traversé par un signal optique de longueur d'onde 1,55µm.

Comme le montre ce graphe au point 50, en fonctionnement standard sans modification de l'indice de réfraction de la zone centrée 14 du guide d'onde 9, le coupleur MMI 3 répartit la moitié de la puissance du signal optique entrant sur chaque sortie. La puissance sur les sorties est parfaitement équilibrée.

Pour changer cette répartition, l'indice de réfraction peut être modifié selon deux méthodes. La première, que nous appellerons par effet plasma, peut être obtenue par une injection de courant. C'est-à-dire une augmentation de la densité d'électrons dans la région d'injection. Le résultat de l'injection de courant permet de réduire l'indice de réfraction et correspond à la portion 51 du graphe. La puissance du signal est alors reproduite inversement proportionnelle sur chaque sortie. Pendant que la puissance du signal optique croît sur la sortie 5, il décroît sur l'autre. En deçà d'un seuil 52 de l'indice de réfraction, le comportement change avec une décroissance de la puissance des deux signaux de sortie pour atteindre un niveau de puissance plancher. En dessous de ce seuil 52, la somme des ratios entre les sorties n'est plus égale à 1.

La seconde méthode, que nous appellerons effet thermo-optique, correspond à un réglage de la température dans la zone centrée 14. Les effets de ce réglage sont visibles dans la portion 53 du graphe. Dans ce cas, la puissance sur la sortie 5 décroît lorsque celle de la sortie 8 augmente, avec l'augmentation de l'indice de réfraction. Cette croissance progresse jusqu'à atteindre un sommet avec un ratio 100:0% aux points 54, 55. Dans ce cas, toute la puissance du signal est transmise par la sortie 8 au détriment de la sortie 5. Le coupleur MMI 3 se comporte alors comme un interrupteur marche / arrêt. Au-delà de ce seuil, l'augmentation thermique continue de faire croître l'indice de réfraction, mais l'effet sur la répartition de la puissance est inversé.

On remarque que par effet thermique ou thermo-optique, il suffit d'une variation de l'indice de réfraction d'environ +0.05 pour faire varier le ratio de 50:50% à un rapport de 0:100%. C'est avec l'électrode 6 représentée sur la figure 1 que l'on fait varier le ratio de répartition entre les sorties du coupleur MMI 3.

En variante, l'utilisation de silicium par exemple permet d'aboutir à des conclusions exactement identiques.

Il est possible d'obtenir de plus amples détails sur le fonctionnement d'un coupleur MMI 2x2 dans l'article « Multimode Enterference couplers with tunable power splitting ratios » de J. Leuthold et C.H. Joyner, éditeur IEEE/OSA, Journal of Lightwave Technology, May 2001 volume 19 number 5.

En référence à la **figure 4****,** on va décrire le comportement d'un simple anneau résonateur 2 couplé à un guide d'onde droit. L'anneau résonateur est un filtre qui atténue une longueur d'onde et toutes les longueurs d'onde espacées de l'intervalle spectral libre (également noté ISL). L'anneau résonateur est donc un filtre qui filtre des longueurs d'onde espacées par une périodicité correspondante à l'ISL. Dans le domaine fréquentiel, cela revient à dire que l'anneau résonateur filtre une fréquence fondamentale et ses harmoniques. L'intervalle de fréquence libre est inversement proportionnel au rayon de l'anneau résonateur.

Le fonctionnement du filtre est le suivant : lorsqu'une onde optique est injectée à une extrémité du guide d'onde droit, une fraction de cette onde transite par couplage dans l'anneau résonateur. La fraction de l'onde qui n'a pas transité par l'anneau résonateur rencontre l'onde sortante, provoquant des interférences destructrices pour certaines longueurs d'onde spécifiques.

Sur la figure 4, l'anneau résonateur filtre la longueur d'onde référencée 60. La figure montre que l'atténuation provoquée par l'anneau résonateur est dépendante du facteur de couplage encore appelé coefficient de couplage entre l'anneau résonateur et un guide d'onde. Ainsi pour un facteur de couplage de 10% l'atténuation similaire à toutes les fréquences est de 1 ou 2dB. Pour un facteur de couplage de 70%, l'atténuation est plus élevée pour la longueur d'onde 60 que pour les autres longueurs d'onde. L'atténuation est ici maximale pour un facteur de couplage d'environ 80% correspondant au facteur de couplage critique de l'anneau résonateur avec le guide d'onde. Les pertes internes à l'anneau résonateur sont ici de 6,5cm-1.

Dans le dispositif de filtrage de la figure 1, le couplage de l'anneau résonateur 2 avec l'entrée 4 / sortie 5 est assuré par le coupleur MMI 3 inséré dans le circuit de l'anneau. Le ratio ou rapport de répartition du coupleur MMI 3 correspond dans ce cas au facteur de couplage ou coefficient de couplage de l'anneau résonateur 2. Ainsi à l'aide de l'électrode 6, il est possible d'agir sur la répartition de la puissance qui passe dans l'anneau par rapport à celle transmise par la sortie 5.

Ce réglage agit également sur le ratio entre le niveau haut et le niveau bas de la fonction de transfert de l'anneau résonateur au même titre que les pertes internes à l'anneau. Pour satisfaire la condition de couplage critique, il faut que les pertes de couplages soient égales aux pertes internes de l'anneau. En d'autres termes, il faut ajuster le rapport de répartition du coupleur MMI 3 à l'aide de l'électrode 6 pour respecter cette condition. Par cette méthode, le contrôle du ratio entre le niveau haut et le niveau bas de l'anneau résonateur est obtenu avec un simple guide d'onde passif, totalement compatible avec un schéma d'intégration photonique sur silicium.

Selon un mode de réalisation, le dispositif de filtrage décrit à la figure 1 comprend en variante un mécanisme de réglage de la température de l'anneau résonateur non représenté sur la figure 1. Ce mécanisme permet de modifier l'indice de réfraction interne à l'anneau par effet thermo-optique. Il permet ainsi de modifier la longueur d'onde de résonance de l'anneau résonateur. Ainsi, il est possible de régler finement la longueur d'onde définit préalablement lors de la conception par le choix du rayon de l'anneau. Selon l'application, l'anneau peut alors, être accordé avec la longueur d'onde du laser auquel le dispositif est raccordé.

Le mécanisme de réglage est disposé pour couvrir l'anneau résonateur. De préférence le mécanisme ne couvre pas le coupleur MMI pour ne pas interférer avec le réglage effectué à l'aide de l'électrode métallique. Le mécanisme permettant de réaliser ce réglage est par exemple un module à effet thermoélectrique encore appelé effet Peltier. Le mécanisme peut également être une électrode métallique.

Ce dispositif de filtrage optique peut être exploité dans des équipements d'un réseau optique passif utilisant par exemple la technique WDM.

Par exemple, un tel filtre peut être utilisé pour la conception d'un démultiplexeur. Dans ce cas, un dispositif de filtrage différent est utilisé pour chaque longueur d'onde à extraire du signal WDM. Chaque filtre, en parallèle, reçoit le signal WDM d'entrée et restitue en sortie le signal d'entrée duquel a été soustrait les longueurs d'onde rejetées par le filtre. Le signal de sortie sur une ligne du démultiplexeur est obtenu par interférence destructive entre le signal d'entrée et le signal produit par le filtre. Plus de détails sur ce type d'application sont proposés dans l'article « Design of 16 Channel Multiplexer using SOI ring resonator Array » de Usha Raghunath, Malathi S, Yedhu Krishna, T. Srinivas, Govind Kadambi.

Un second type d'application pouvant bénéficier du dispositif de filtrage est le correcteur de spectre optique ou OSR (de l'anglais «Optical Spectrum Reshaper »). Ce type de correcteur a pour but de corriger la dérive en fréquence entre les '0' et les '1' d'un signal numérique, c'est-à-dire entre le niveau bas et le niveau haut du signal. Le filtre permet notamment dans ce type d'application d'écraser la puissance lumineuse du niveau bas par rapport à celle du niveau haut et, donc augmenter le rapport de puissance entre les deux niveaux. L'OSR est utilisé par exemple à la sortie d'un laser pour reformer le signal. Ainsi, il est possible d'améliorer la qualité de la source et du signal NRZ (de l'anglais Non Return to Zéro) transmis. Une telle application est décrite plus en détail dans le document US2010/0098 436 A1.

Un tel filtre peut également être utilisé dans un modulateur électro-optique réalisant une modulation d'amplitude par changement de l'indice de réfraction à l'aide de l'injection de charge obtenue par l'électrode métallique. Une telle application est détaillée dans l'article « Polymer Micro-Ring Filters and Modulators ».

Bien que l'invention ait été décrite par un dispositif simple de filtrage, il est évident qu'elle peut être exploitée dans des architectures à anneaux résonateurs bien plus complexe, avec des anneaux en parallèle ou en série. Par exemple, elle peut être utilisée dans des interféromètres Mach-Zehnder pour divers formats de modulation, comme QPSK, DQPSK, QAM.

Certains des éléments représentés, notamment les unités de commande, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'invention peut par exemple être réalisée à l'aide de technologies basées sur des matériaux du groupe III-V.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Dispositif de filtrage optique (1) comportant :
un anneau résonateur (2), **caractérisé en ce qu'**il comprend
un coupleur (3) par interférence multimode comprenant deux entrées (4, 7), deux sorties (5, 8) et un guide d'onde (9) multimode reliant les deux entrées aux deux sorties, le coupleur présentant une première entrée (4) servant d'entrée du dispositif de filtrage et apte à recevoir un signal optique d'entrée (10), une première sortie (5) correspondant à la sortie du dispositif de filtrage et apte à produire un signal optique de sortie (12), le guide d'onde comportant une zone de couplage (11) disposée entre les entrées et les sorties et apte à former quatre images du signal d'entrée,
l'anneau résonateur (2) étant disposées de manière à relier une seconde sortie (8) du coupleur, à une seconde entrée (7) du coupleur,
dans lequel le dispositif de filtrage comporte
un élément de réglage (6) apte à modifier localement l'indice de réfraction dans la zone de couplage (11) dudit guide d'onde (9) multimode pour faire varier un coefficient de couplage entre le coupleur (3) et l'anneau résonateur (2).

2. Dispositif selon la revendication 1, dans lequel l'élément de réglage (6) est apte à modifier l'indice de réfraction dans une partie centrale (14) de la zone de couplage (11), couvrant deux images centrales dans le guide d'onde (9).

3. Dispositif selon la revendication 1 ou 2, dans lequel l'élément de réglage (6) est apte à modifier l'indice de réfraction dans une partie périphérique (15) de la zone de couplage (11) couvrant deux images périphériques dans le guide d'onde (9), la partie périphérique (15) étant centrée dans la direction longitudinale du guide d'onde (9).

4. Dispositif selon les revendications 1 à 3, dans lequel l'élément de réglage (6) est apte à modifier la température de la zone de couplage (11) pour modifier l'indice de réfraction.

5. Dispositif selon l'une des revendications 1 à 3, dans lequel l'élément de réglage (6) est apte à injecter des charges électrique dans la zone de couplage (11) diminuant l'indice de réfraction.

6. Dispositif selon l'une des revendications 1 à 5, dans lequel l'élément de réglage (6) comporte une électrode métallique disposée sur une partie centrée dans la direction longitudinale du guide d'onde.

7. Dispositif selon les revendications 1 à 4, dans lequel l'élément de réglage (6) comporte une résistante chauffante disposée sur la zone de couplage (11).

8. Dispositif selon les revendications 1 à 4, dans lequel l'élément de réglage (6) comporte un film chauffant déposé sur la zone de couplage (11).

9. Dispositif selon l'une des revendications 1 à 8, dans lequel le coupleur (3) a une longueur optique correspondant à un coefficient de couplage par défaut égal à 50%, tel que le signal optique d'entrée (10) est transmis pour moitié sur la première sortie (5) et pour moitié sur la seconde sortie (8).

10. Dispositif selon l'une des revendications 1 à 9, comprenant en outre un module d'ajustement des longueurs d'onde filtrées par l'anneau résonateur, le module d'ajustement étant apte à modifier une propriété physique de l'anneau résonateur (2) pour régler les longueurs d'onde filtrées par l'anneau résonateur.

11. Dispositif selon l'une des revendications 10, dans lequel le module d'ajustement est apte à modifier la température de l'anneau résonateur (2).

12. Dispositif selon l'une des revendications 1 à 11, dans lequel l'anneau résonateur (2), le coupleur (3), et l'élément de réglage (6), sont intégrés de manière monolithique dans un composant optique intégré.

13. Dispositif selon l'une des revendications 1 à 12, dans lequel le composant comporte un substrat en silicium.

14. Dispositif selon l'une des revendications 1 à 12, dans lequel le composant comporte un substrat en phosphure d'indium.

15. Dispositif selon l'une des revendications 1 à 14, dans lequel l'anneau résonateur (2) est apte à filtrer le signal d'entrée (10) pour rejeter en sortie une composante du signal d'entrée correspondant à une longueur d'onde λ et des harmoniques de λ.

## Patentansprüche

1. Optische Filtervorrichtung (1) umfassend:
einen Resonanzring (2), **dadurch gekennzeichnet, dass** er umfasst:
einen Multimoden-Interferenz-Koppler (3) umfassend zwei Eingänge (4, 7), zwei Ausgänge (5, 8) und einen, die zwei Eingänge mit den zwei Ausgängen verbindenden Multimoden-Wellenleiter (9), wobei der Koppler einen ersten Eingang (4) zur Aufnahme einer Filtervor-richtung aufweist und dazu geeignet ist, ein optisches Eingangssignal (10) zu empfangen, wobei ein erster Ausgang (5) dem Ausgang der Filtervorrichtung entspricht und dazu geeignet ist, ein optisches Ausgangssignal (12) zu produzieren, wobei der Wellenleiter einen Kopplerbereich (11), angeordnet zwischen den Eingängen und den Ausgängen und dazu geeignet, vier Bilder des Eingangssignals zu erzeugen, umfasst,
wobei der Resonanzring (2) derart angeordnet ist, dass er einen zweiten Ausgang (8) des Kopplers mit einem zweiten Eingang des Kopplers (7) verbindet,
wobei die Filtervorrichtung umfasst
ein Bedienelement (6) dazu geeignet, den Brechungsindex örtlich in dem Kopplerbereich (11) des Multimoden-Wellenleiters (9) zu modifizieren, um den Kopplungskoeffizienten zwischen dem Koppler (3) und dem Resonanzring (2) zu variieren.

2. Vorrichtung gemäß Anspruch 1, wobei das Bedienelement (6) dazu geeignet ist, den Brechindex in einem zentralen Bereich (14) des Kopplerbereichs (11), abdeckend zwei zent-rale Bilder in dem Wellenleiter (9), zu modifizieren.

3. Vorrichtung gemäß Anspruch 1 oder 2, wobei das Bedienelement (6) dazu geeignet ist, den Brechungsindex in einem Randbereich (15) des Kopplerbereiches (11), abdeckend zwei Randbilder in dem Wellenleiter (9), zu modifizieren, wobei der Randbereich (15) in der Längsrichtung des Wellenleiters (9) zentriert ist.

4. Vorrichtung gemäß den Ansprüchen 1 bis 3, wobei das Bedienelement (6) dazu geeignet ist, die Temperatur des Kopplerbereiches (11) zu modifizieren, um den Brechungsindex zu verändern.

5. Vorrichtung gemäß einem der Ansprüche 1 bis 3, wobei das Bedienelement (6) dazu geeignet ist, elektrische Ladungen zur Senkung des Brechungsindex in den Kopplerbereich (11) zu injizieren.

6. Vorrichtung gemäß einem der Ansprüche 1 bis 5, wobei das Bedienelement (6) eine metallische Elektrode, angeordnet in einem zentrierten Bereich in Längsrichtung des Wellenleiters, umfasst.

7. Vorrichtung gemäß einem der Ansprüche 1 bis 4, wobei das Bedienelement (6) einen Heizstab, angeordnet auf dem Kopplerbereich (11), umfasst

8. Vorrichtung gemäß einem der Ansprüche 1 bis 4, wobei das Bedienelement (6) eine Heizfolie, angeordnet auf dem Kopplerbereich (11), umfasst

9. Vorrichtung gemäß einem der Ansprüche 1 bis 8, wobei der Koppler (3) eine optische Länge entsprechend einem Standardkopplerkoeffizient gleich 50 % aufweist, so dass das optische Eingangssignal (1) zur Hälfte auf den ersten Ausgang (5) und zur Hälfte auf den zweiten Ausgang (8) durchgeschaltet wird.

10. Vorrichtung gemäß einem der Ansprüche 1 bis 9, umfassend unter anderem ein Anpassungsmodul für diedurch den Resonanzring gefilterten Wellenlängen, wobei das Anpassungsmodul dazu geeignet ist, eine physikalische Eigenschaft des Resonanzringes (2) zu verändern, um die durch den Resonanzring gefilterten Wellenlängen einzustellen.

11. Vorrichtung gemäß Anspruch 10, wobei das Anpassungsmodul ausgebildet ist, die Temperatur des Resonanzringes (2) zu modifizieren.

12. Vorrichtung gemäß einem der Ansprüche 1 bis 11, wobei der Resonanzring (2), der Koppler (3) und das Bedienelement (6) monolithisch in einem integrierten optischen Element integriert sind.

13. Vorrichtung gemäß einem der Ansprüche 1 bis 12, wobei das Element ein Silicium-Substrat umfasst.

14. Vorrichtung gemäß einem der Ansprüche 1 bis 12, wobei das Element ein Indium-phosphid-Substrat umfasst.

15. Vorrichtung gemäß einem der Ansprüche 1 bis 14, wobei der Resonanzring (2) ausgebildeet ist, das Eingangssignal (1) zu filtern, um am Ausgang ein Element des Eingangssignals entsprechend einer Wellenlänge λ und Harmonischen von λ auszugeben.

## Claims

1. An optical filtering device (1) comprising:
a ring resonator (2); **characterized in that** it comprises
a multimode interference coupler (3) comprising two inputs (4, 7), two outputs (5, 8) and a multimode waveguide (9) connecting the two inputs to the two outputs, the coupler having a first input (4) serving as an input for the filtering device and able to receive an input optical signal (10), and a first output (5) corresponding to the output of the filtering device and able to produce an output optical signal (12), the waveguide comprising a coupling zone (11) arranged between the inputs and outputs and able to form four images of the input signal,
the ring resonator (2) being arranged so as to connect a second output (8) of the coupler to a second input (7) of the coupler,
wherein the filtering device comprises
a tuning element (6) able to modify locally the refractive index in the coupling zone (11) of said multimode waveguide (9) in order to vary a coupling coefficient between the coupler (3) and the ring resonator (2).

2. The device as claimed in claim 1, wherein the tuning element (6) is able to modify the refractive index in a central part (14) of the coupling zone (11), covering two central images in the waveguide (9).

3. The device as claimed in claim 1 or 2, wherein the tuning element (6) is able to modify the refractive index in a peripheral part (15) of the coupling zone (11) covering two peripheral images in the waveguide (9), the peripheral part (15) being centered in the longitudinal direction of the waveguide (9).

4. The device as claimed in claims 1 to 3, wherein the tuning element (6) is able to modify the temperature of the coupling zone (11) in order to modify the refractive index.

5. The device as claimed in one of claims 1 to 3, wherein the tuning element (6) is able to inject electrical charge into the coupling zone (11) decreasing the refractive index.

6. The device as claimed in one of claims 1 to 5, wherein the tuning element (6) comprises a metal electrode arranged on a part centered in the longitudinal direction of the waveguide.

7. The device as claimed in claims 1 to 4, wherein the tuning element (6) comprises a resistive heater arranged on the coupling zone (11).

8. The device as claimed in claims 1 to 4, wherein the tuning element (6) comprises a heating film deposited on the coupling zone (11).

9. The device as claimed in one of claims 1 to 8, wherein the coupler (3) has an optical length corresponding to a coupling coefficient by default equal to 50%, such that half the input optical signal (10) is transmitted to the first output (5) and half is transmitted to the second output (8).

10. The device as claimed in one of claims 1 to 9, furthermore comprising a module for adjusting the wavelengths filtered by the ring resonator, the adjusting module being able to modify a physical property of the ring resonator (2) in order to tune the wavelengths filtered by the ring resonator.

11. The device as claimed in claim 10, wherein the adjusting module is able to modify the temperature of the ring resonator (2).

12. The device as claimed in one of claims 1 to 11, in which the ring resonator (2), the coupler (3), and the tuning element (6) are monolithically integrated into an integrated optical component.

13. The device as claimed in one of claims 1 to 12, in which the component comprises a silicon substrate.

14. The device as claimed in one of claims 1 to 12, in which the component comprises an indium phosphide substrate.

15. The device as claimed in one of claims 1 to 14, in which the ring resonator (2) is able to filter the input signal (10) in order to remove from its output a component of the input signal corresponding to a wavelength λ and harmonics of λ.
